# EUROPEAN PATENT APPLICATION

(11) **EP 4 847 418 A1**
(43) Date of publication of application: **02.12.2026**
(21) Application number: 25179871.6
(22) Date of filing: 30.05.2025
(51) Int. Cl.: B65G 1/04

(54) **METHODS AND CONTROLLERS**

(71) Applicant: AutoStore Technology AS, 5578 Nedre Vats (NO)
(72) Inventor: Brecke, Ruben Bjarnesen, 5578 Nedre Vats (NO); Novák, Samuel Matyá, 5578 Nedre Vats (NO)
(74) Representative: Kilburn & Strode LLP

(57) **Abstract**

The disclosure relates to a method for managing errors at a port of an automated storage and retrieval system, the port comprising a plurality of modules, the method comprising: determining a type of an error related to a module of the plurality of modules, the error occurring during an operation of the port; when it is determined that the type of the error is a first error type, executing a first error type recovery for which the operation of the port continues.

## Description

### TECHNICAL FIELD

The disclosure relates to methods and controllers. More particularly, it relates to methods, controllers and systems for managing errors at a port of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are re-stocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robotic container-handling vehicles place the containers in the ports, and the ports are then controlled to present the containers to operators for items to be inserted to or removed from the containers. When these insertion and removal actions are complete, the ports are controlled to return the containers for collection by the robotic container-handling vehicles.

Unwanted errors associated with ports may occur.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a conceptual cross-sectional diagram of a port;
Fig. 5B shows a block diagram of the interaction between the port and a controller of the port;
Fig. 6 shows a flowchart which depicts a method for managing errors at the port;
Fig. 7 shows a flowchart which depicts a method for managing errors at the port, wherein the module with an error is a conveyor belt; and
Fig. 8 shows another flowchart which depicts a method for managing errors at the port.

### DETAILED DESCRIPTION

In overview, the disclosure relates to methods and controllers for managing errors at a port in an automated storage and retrieval system.

During an operation of a port, the port is controlled to present containers to operators for items to be inserted to or removed from the containers. Errors may occur during the operation of the port. The errors may occur, for example, due to malfunctioning equipment or due to an erroneous sensor reading.

The inventors recognized that the errors in ports range in severity, veracity, and ramifications. The inventors recognized that if some certain conditions are satisfied, not all errors require a substantial intervention (such as stopping the operation of the port and/or a manual input of the operative) to correct the errors. Therefore, herein is provided a method for managing errors which determines a type of the error and based on the type of the error, where the methods use appropriate recovery techniques to correct the errors. For some errors in certain circumstances, related to the port for example, the methods execute silent error recovery. Silent error recovery is a process wherein the error is corrected without any substantial intervention to the operation of the port. The silent error recovery 'corrects' ('resets' or 'clears') the fault in that the fault is processed 'quietly', allowing substantially normal operation of the port during the silent recovery.

This results in improved port throughput and safety leading to improved storage and retrieval efficiency. Downtime of the port is reduced because the operation of the port is not stopped for all errors. Moreover, in a port with a hatch, the silent error recovery is initiated only when the hatch is closed. This prevents a human operator from inserting a hand/arm into the port. This avoids injury and also saves time in rectifying the error.

### Automated storage and retrieval system overview

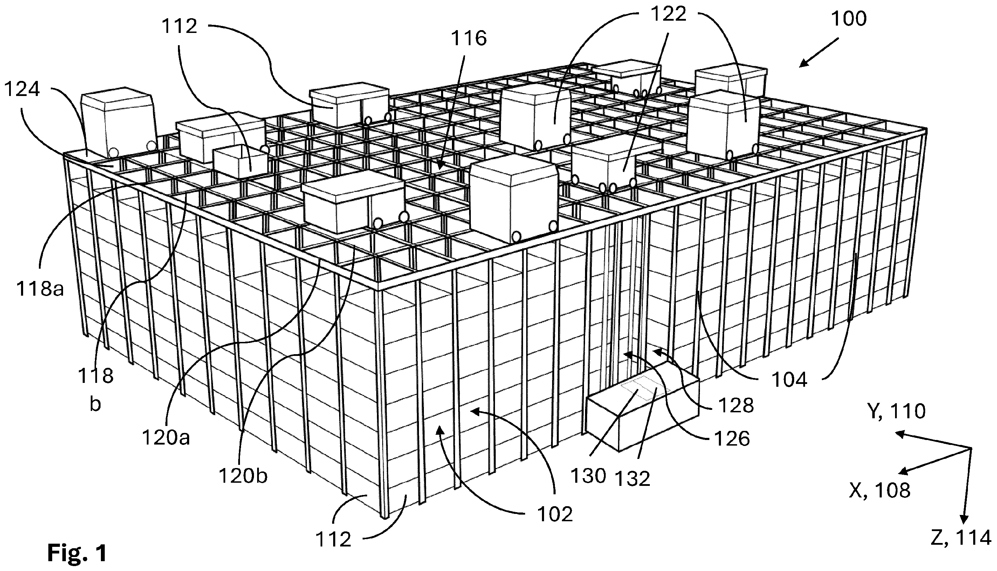

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

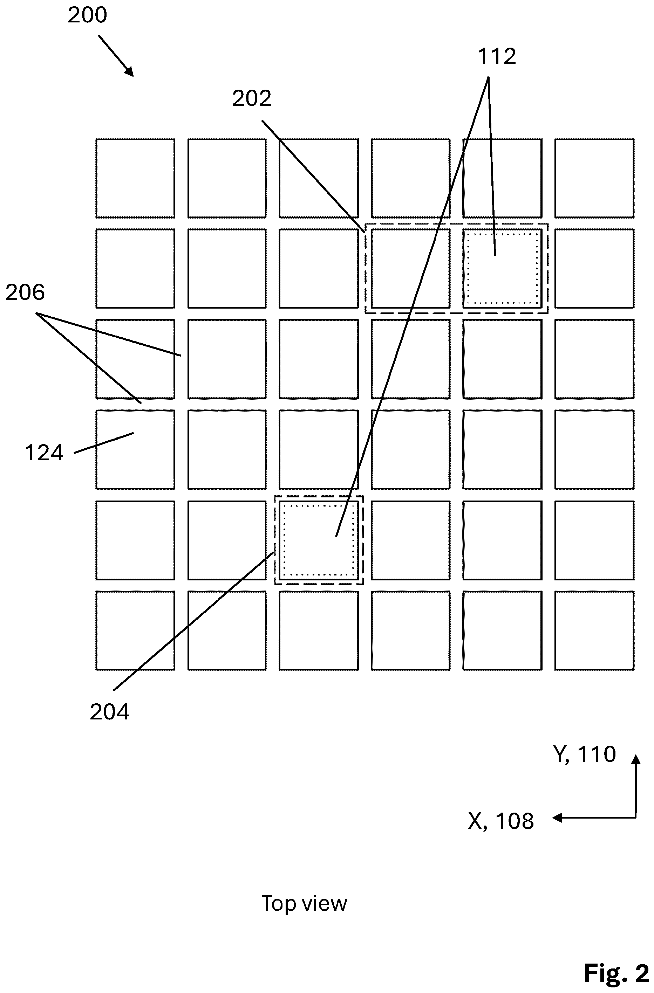

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

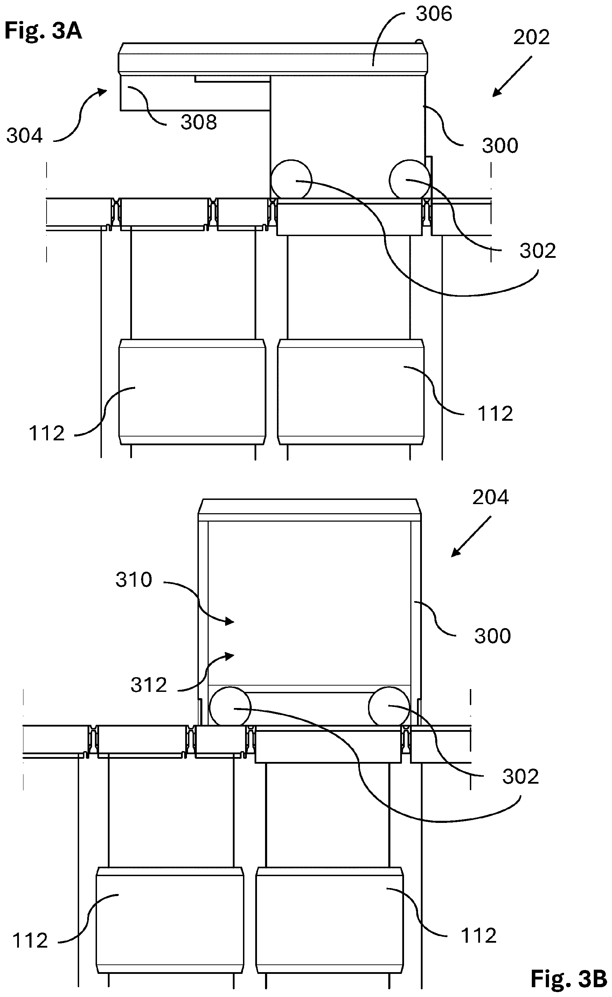

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

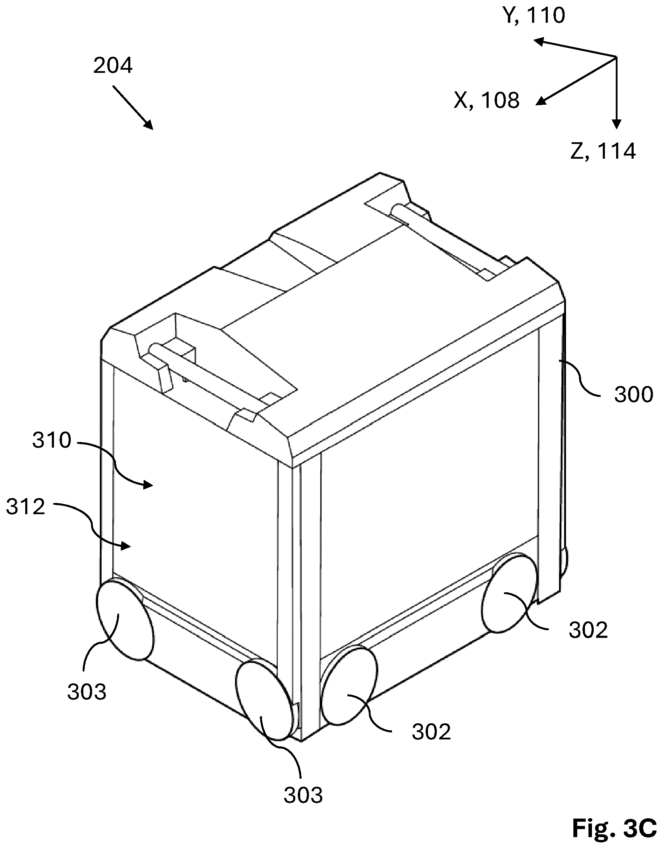

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

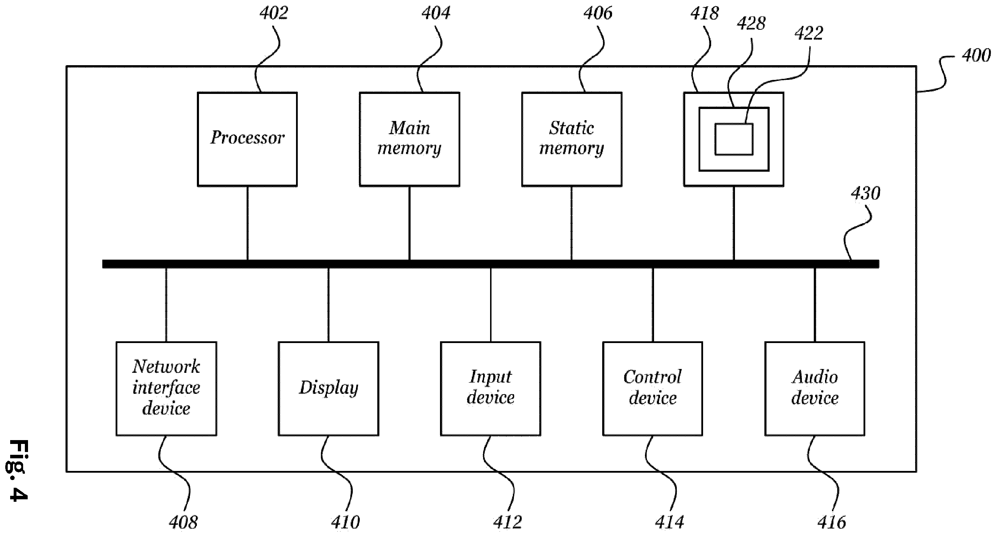

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Port

The present disclosure will now be described in general terms before implementations of the disclosure are described by way of example with reference to the drawings. The words "may" and "can" are used to refer to a feature that is optional, i.e. in some implementations of the disclosure, the feature is present, and in some implementations of the disclosure, the feature is not present.

A controller is provided herein. The controller can be configured to control movement of containers at a port of an automated storage and retrieval system. The controller may be configured to control the port. The controller may be configured to control modules of the port.

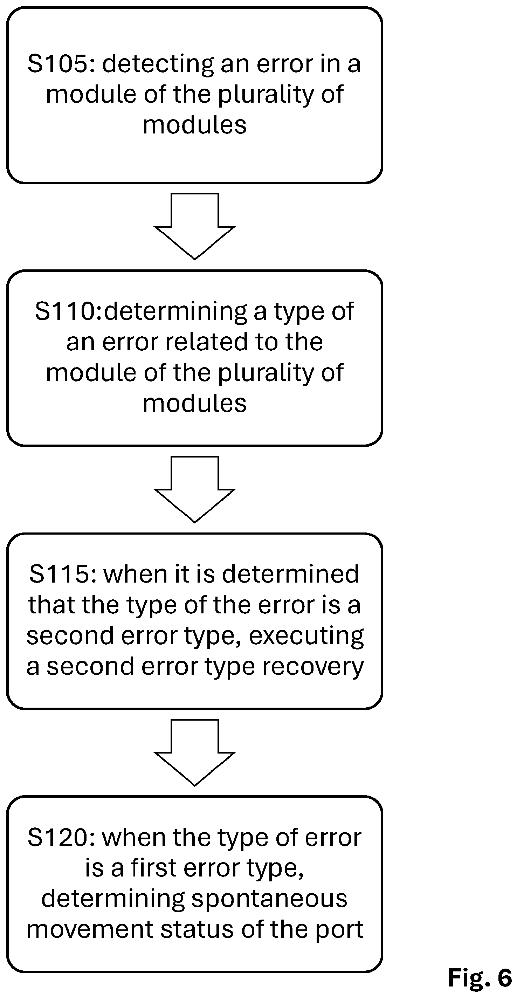

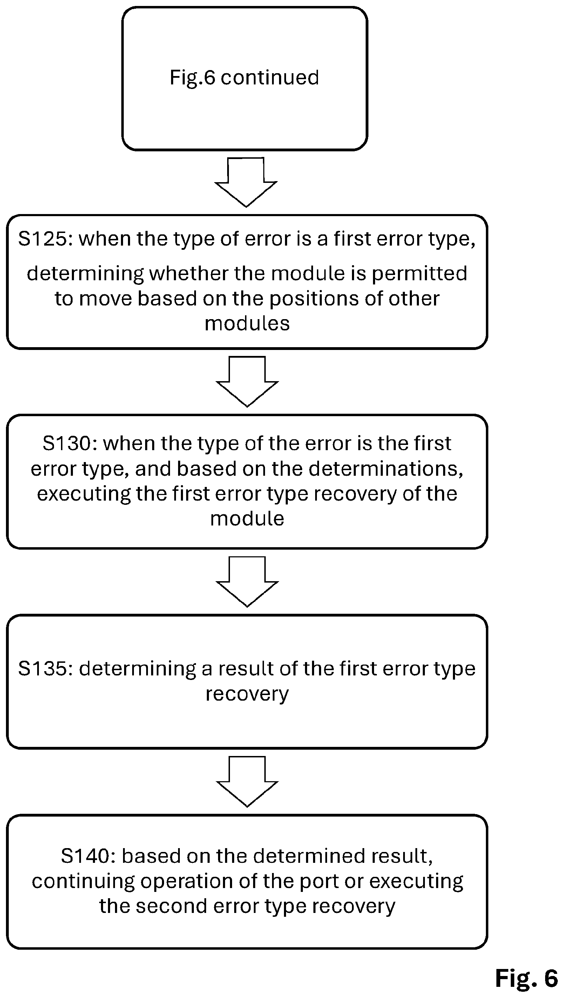

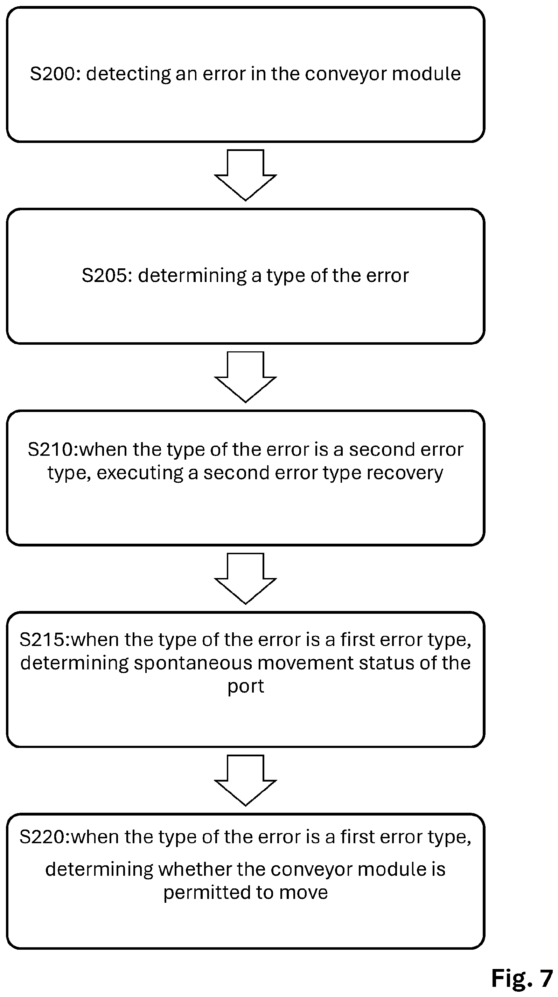

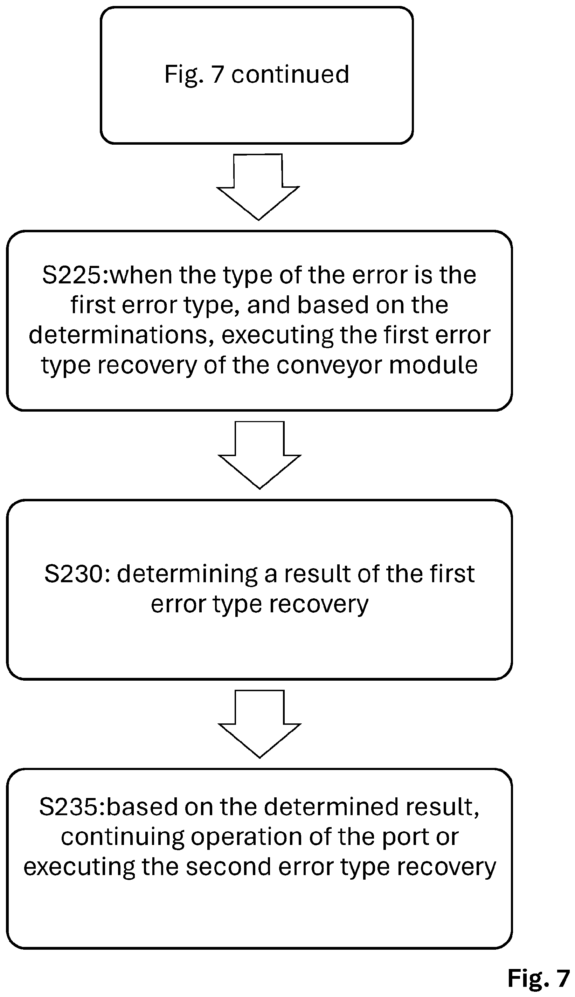

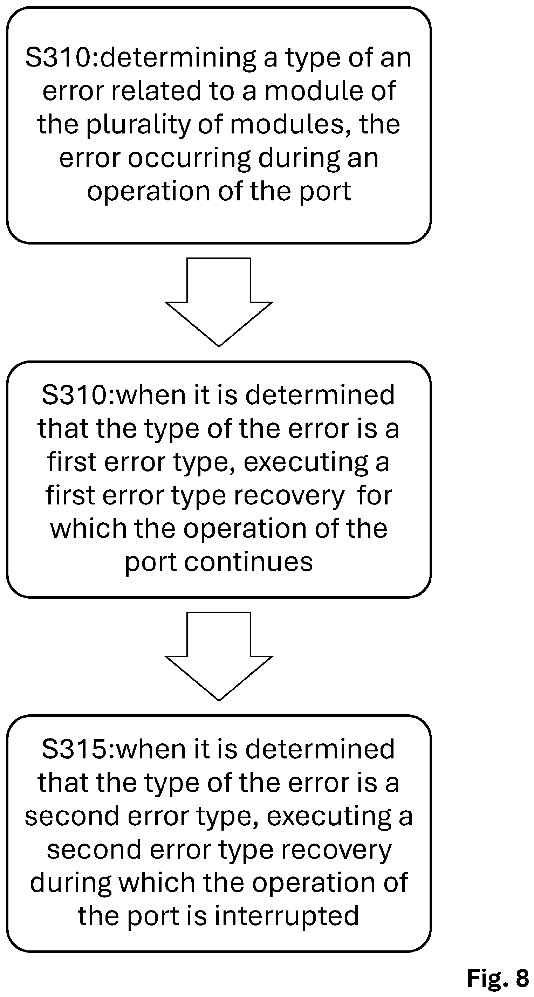

The controller may be configured to implement the methods described in Fig.6. The controller may be configured to implement the method described in Fig. 7. The controller may be configured to implement the method described in Fig. 8.

A port is provided herein. The port may be configured to be controlled by the controller described herein.

The port can be configured for accessing containers in the automated storage and retrieval system. The port can comprise a first position, a second position, and a third position for containers. The first position can be a position in which a container is accessible by an operator for the insertion and/or removal of objects into/from the container. The second position can be below a shaft through which containers are delivered from a storage area in the automated storage and retrieval system to the port, and/or delivered from the port to the storage area. The containers can be delivered by a container lift. The third position can be a position in which a container is temporarily stowed. The first position, second position and third position can be arranged in a line. The second position can be located between the first position and the third position.

The port may be VersaPort^{™} from AutoStore. The port may be any other port similar to VersaPort^{™}.

The port can further comprise a conveyer. The conveyor may be configured to move containers between the first position, the second position and the third position. The conveyor may be configured to move in a plurality of small increments for silent error recovery. The conveyor may be configured to move in a plurality of small increments to readjust the positions of the containers.

The conveyer can comprise a conveyer belt. The conveyer belt can extend between the first position, second position and third position. The conveyor belt can be configured to move in small increments (less than or around 1 cm) for silent error recovery. The conveyer can be configured to move each container on the conveyer in unison.

The conveyor may comprise a conveyor driving unit. The conveyor driving unit may propel the conveyor.

The port may further comprise a hatch. The operational state of the hatch may indicate the position of the hatch. The hatch may be closeable. The hatch may be open (i.e. the operator may access the bin inside of the port). When the hatch is closed, the operator cannot reach into the port. Thus, safety of the port is improved.

The port may further comprise at least one sensor. The sensors may be placed at various positions throughout the port so that the sensors can monitor each module of the port. The sensors may be configured to monitor modules of the port. Each sensor may be configured to send a signal to a controller.

The controller can determine, based on a signal from a sensor, an error in the operation of the port.

The sensor can be a weight sensor of the container lift. The weight sensor can be configured to detect that the first container is not engaged with the container lift when the container lift attempts to lift the first container.

The sensor can be arranged at the second position in the port. The sensor can detect that the first container has remained in the second position when the container lift attempts to lift the first container. Two or more sensors can be arranged at the second position in the port. It will be appreciated that the sensors may be positioned at different positions in the port.

The sensor can be an optical sensor or a weight sensor. The sensor can be any other suitable type of sensor.

The sensor can be integrated into a gripping device of the container lift. The gripping device can be configured to engage the first container. The sensor can determine that the gripping device is engaged and/or not engaged to the first container.

The sensor may be integrated into the conveyor of the port. The sensor may be integrated into the walls of the port housing. The sensor may be incorporated in the port so that they do not obstruct the operation of the port and are able to monitor the operation of the parts and/or modules of the port.

The sensor may be in communication with the controller. The sensor and the controller may be connected wirelessly.

The port may further comprise a port housing. The port housing may protect the parts of the port.

The operator can be a human operator.

The operator can be an object picking robotic device.

The container lift can be a component of container-handling robotic vehicle. The container-handling robotic vehicle can be configured to transport containers in the automated storage and retrieval system. When initiating delivery of a container from/to the port to/from the storage area, the controller can be configured to send a control signal to the container-handling robotic vehicle to lower the gripping device of the container lift to the second position in the port.

As used herein, the term "operation of a port" may refer to the standard functioning of the port in enabling access to stored items within an automated storage system. This may include, but is not limited to, receiving storage containers from the storage grid, presenting the containers for item picking or replenishment, facilitating the return of containers to storage, and coordinating with automated handling equipment such as robots, conveyors, or lifting mechanisms.

As used herein, the term "module" may refer to a movable part of the port. The movable part of the port may be configured to perform one or more functions related to the handling of storage containers within an automated storage system. This includes, but is not limited to, transferring containers between different vertical or horizontal positions, engaging or disengaging containers from transport mechanisms, positioning containers for access (e.g. for picking or replenishment), and interacting with other mechanical or robotic elements of the system to facilitate container flow through the port.

A module may be the conveyor. A module may be the conveyor comprising the belt. A module may be a hatch module. A module may be a hatch module comprising a hatch. A module may be the container lift. The plurality of modules may comprise at least one of: the conveyor module, the hatch module, and the container lift module. In some examples, a module may comprise at least one sensor. For instance, the conveyor module with its sensors may be referred to as "module".

### Methods for managing errors

A method for managing errors at a port of an automated storage and retrieval system, the port configured for accessing containers in the automated storage and retrieval system is described herein. The controller is configured to perform the steps of this method.

The method for managing errors at a port of an automated storage and retrieval system (ASRS), the port may comprise a plurality of modules , the method may comprise: determining a type of an error related to a module of the plurality of modules, the error occurring during an operation of the port; when it is determined that the type of the error is a first error type, executing a first error type recovery for which the operation of the port continues. Thus, advantageously, an error in a module of a port is corrected without interrupting the operation of the port. The error may be a signal related to a fault in the port.

The method may comprise: when it is determined that the type of the error is a second error type, executing a second error type recovery during which the operation of the port is interrupted. Thus, advantageously, the more severe errors interrupt the operation of the port which increases safety of the operative and prevents damage to the parts of the port.

The method may comprise: wherein the first error type recovery comprises clearing the error with the operation being continuous between when the error occurs and clearing of the error; wherein the second error type recovery comprises interruption of the operation after the error occurs. Thus, advantageously, the more severe errors interrupt the operation of the port which increases safety of the operative and prevents damage to the parts of the port. While less severe errors may be corrected without the interruption of the operation of the port which increases throughput of the port.

The method may further comprise: wherein the first error type comprises a soft error, the second error type comprises a hard error.

The type of the error may be a first error type or a second error type. The "first error type" may be referred to as a "soft error". The "second error type" may be referred to as a "hard error". A "first error type recovery" may be referred to as "a soft error type recovery" or "silent error recovery" or "silent error type recovery" . A "second error type recovery" may be referred to as a "hard error type recovery" or "hard error recovery".

The soft error/the first error type may be defined as an error that is correctable without a substantial intervention. The soft error may be defined as an error that does not require a substantial intervention to correct. An example of an intervention that is not substantial may be a controller resetting a belt module to its initial starting position. The soft error may be suitable for automatic silent recovery. The soft errors may be less severe errors, in comparison to the hard errors. The soft error may be corrected while continuing the operation of the port. The soft error may be corrected while substantially maintaining the operation of the port. The intervention that is not substantial may refer to an action that does not require any manual or automated action that involves interrupting the operation of the port.

The hard error/second error type may be defined as an error that requires a substantial intervention to correct. The hard error may not be suitable for silent recovery. The hard error may require a substantial intervention to correct which stops or significantly slows down the operation of the port. An example of the hard error may be a complete sensor failure. In some examples, the hard error may require an intervention from an operative of the port. For example, the substantial intervention may be an operator pressing a button to stop the operation. The substantial intervention may refer to any manual or automated action that involves interrupting the operation of the port.

"Error" may refer to a deviation from an expected value, or expected behaviour of the port. This may include, but is not limited to: an erroneous signal received from a sensor, such as a signal corrupted by noise, delay, dust, or incorrect measurement; and/or a fault or malfunction within a component and/or module of the port, such as hardware failure, communication breakdown, or software anomaly, which causes the port to operate outside its intended parameters.

The method may further comprise wherein the error is a first error type, further comprising: determining a type of a second error related to the module of the plurality of modules, the second error occurring during the operation of the port, in a period overlapping when the first error occurs; and in response: executing the second error type recovery. This advantageously reduces the computational load on the system while improving the safety of the operative.

If more than one error is detected, and one error is a soft error and the other error is a hard error, the controller may prioritize the hard error and execute the hard error recovery. In an instance that multiple errors are detected, the controller may be configured to initiate a hard error recovery.

The method may further comprise: determining if the first error type occurs during an initialization of the port, and if so, executing the second error type recovery. This advantageously prevents damage to the parts of the port in case the error is severe. This also advantageously increases the safety of the operative.

If a soft error is detected during initialization of the port, the controller may be configured execute hard error recovery. Soft errors are not allowed during the initializing stage of the port.

As used herein, the term "initialization of the port" refers to the process of bringing the port into a predefined starting or safe state suitable for commencing and/or resuming normal operation. As used herein, the term "safe state" refers to a state in which no risk of harm to a human operator is present and in which the likelihood of damage to components of the port is substantially eliminated or minimized.

The method may further comprise: wherein determining the type of the error comprises determining the type of error based on error data; wherein the error data comprises historical error data. Thus, advantageously, the accuracy of the error type determination is enhanced.

The method may further comprise: determining the type of the error comprising using learning model; wherein the learning model is trained on the error data; and/or wherein the error data is human-labelled, and/or human inputted data. Thus, advantageously, the accuracy of the error type determination is further enhanced.

The controller may be configured to determine the type of the error based on historical incidence and/or impact data of errors. A learning model may be implemented to collect data of the port operations. The learning model may determine the incident and impact of the previously detected errors. The learning model may analyze features such as error type and/or frequency and/or duration and/or affected modules and/or affected components, and/or recovery results. The learning model may be trained to classify errors as either soft errors/first error type or hard errors/second error type. The learning model may be a supervised learning model. The learning model may be a convolutional neural network. The learning model may be an artificial neural network.

The learning model may be trained on the labelled data set provided by a human. The learning model may be trained on the labelled data set provided by the administrator of the storage and retrieval system. In this data set, a person may label which errors are soft errors and which errors are hard errors depending on one or more factors which may include the type of port and the error. The data may also comprise information about errors and their corresponding recovery techniques of correcting the errors. In other words, a hard error in a module may be assigned a specific hard error recovery for the particular module. A specific soft error in a module may be assigned a specific silent error recovery for the particular module. The data set may be obtained from already operational ports in the same and/or different locations. The model may be uploaded to the controller. The controller may be configured to execute the learning model.

The learning model may further adapt to predict the likelihood of future errors under similar conditions. Thus, advantageously, the learning model enables proactive system adjustments or maintenance scheduling. Over time, the learning model may continuously update its prediction model using newly logged error events and/or the corresponding recovery techniques and thereby improve the accuracy of error classification and/or recovery technique assignment. Advantageously, this adaptive behaviour enhances system resilience and reduces downtime.

The error data may be based on a potential impact of the error data. The potential impact of the error data may comprise data which indicates a potential damage to a part of the port due to the error and/or a potential harm caused to an operative due to the error. The errors that do not cause damage to the parts of the port and/or cause potential harm to the operative may be classified as first error types (soft errors). An example of a soft error may be a wrong sensor reading. The errors that potentially damage the parts of the port and/or potentially cause harm to the operative may be classified as the second error type (hard errors). An example of the hard error may be a current overload in a hatch module.

The controller may be configured to execute the error recovery technique assigned by the learning model.

The error type may be a first error type (soft error) or a second error type (hard error). The first error type recovery may be a silent error recovery. The second error type recovery may be a hard error recovery. Each module of the port may have different recovery techniques. The recovery technique may be based on a module and the error type. For instance, the first error type recovery of a module may be initializing of the module. During the first error type recovery, the module may be initialized separately from the other modules of the port. Thus, beneficially, the operation of the port continues without substantial intervention. During the second error type recovery, all modules of the port may be initialized at the same time. Therefore, the operation of the port is interrupted. This slows down the operation of the port, but maintains the safety of the operative.

As used herein, the term "initialization of a module" refers to the process of moving the module into a predefined safe position. The predefined safe position may be suitable for commencing the operation of the module. The predefined safe position may be suitable for commencing an operation of the port. This may include, but is not limited to, homing the module to a reference position, verifying positional alignment of the module, resetting actuators and/or sensors, and ensuring that the module is in a known and controlled state from which functional tasks can be reliably and safely executed.

In one or more examples, the controller may be configured to determine the type of the error based on a preset selection. The administrator of the storage and retrieval system may provide the preset selection to the controller. The administrator of the storage and retrieval system may classify potential errors as hard errors or soft errors. The administrator of the storage and retrieval system may classify potential errors as hard errors or soft errors and upload this classification to the controller. The administrator of the storage and retrieval system may assign error recovery techniques to each module of the port. The controller may be configured to execute the error recovery technique assigned by the administrator.

An example of the hard error may be an event wherein a container could not be picked up.

An example of the hard error may be an error that occurs due to an event wherein an item fell on the hatch and severely damaged the hatch. In this instance, a human operator must replace the hatch.

An example of the soft error may an error that occurs due to an event wherein the controller receives an unexpected signal. The unexpected signal may be received from the at least one sensor or other parts of the port. To recover this error, the at least one sensor may be initialized separately from the other modules.

An example of the soft error may be an error that occurs due to an event wherein the conveyor moves and the conveyor driving unit provides zero torque. To recover this error, the conveyor may be initialized separately from the other modules of the port.

An example of the soft error may be an error that occurs due to an event wherein the exact position of the container on the conveyor cannot be determined.

An example of the soft error may be an error that occurs due to an event wherein dust obscures a sensor and the sensor provides imprecise readings.

An example of the soft error may be an error that occurs due to an event in which the controller receives incorrect sensor readings due to dust on the conveyor and/or the sensor.

An example of the soft error may be an error that occurs due to an event wherein the lift is not able to deliver the container within a specified time limit.

An example of the soft error may be an error that occurs due to an event wherein the conveyor belt did not finish a trajectory within expected time.

An example of the soft error may be an error that occurs due to an event wherein the conveyor belt movement exceeded predetermined movement distance.

An example of the soft error may be an error that occurs due to an event wherein the container is in an unexpected position.

The skilled person will appreciate that other events that result in an error may occur.

The controller may be configured to execute the hard error recovery (i.e. second error type recovery). The hard error recovery may comprise initializing all modules of the port. The hard error recovery may comprise initializing all modules of the port simultaneously thereby interrupting the operation of the port. The hard error recovery may comprise shutting down the port. The hard error recovery may comprise shutting down the storage and retrieval system. The hard error recovery may comprise notifying the operator so that the operator may manually rectify the error. The hard error recovery may comprise correcting the hard error by an operator. The hard error recovery may comprise correcting the error by a substantial intervention. It will be appreciated that the hard error recovery may comprise other actions which correct the error.

There may be many suitable techniques of performing the second error type recovery (i.e. hard error recovery). Therefore, it will be appreciated that this disclosure is not limited to a specific hard error recovery technique.

The method may comprise: when it is determined that the error is the first error type, controlling a movement of the module based on a position of one or more of the other modules of the plurality of modules. Thus, advantageously, the movement of the module is performed only when it is safe to do so which increases safety for the operator.

The method may comprise: wherein the module is a belt module; the method comprising determining a movement status of the port comprises: determining a hatch state of the hatch module; and when it is determined the hatch state comprises a hatch of the hatch model is open, controlling the hatch module to close the hatch depending on the movement status of the port. Thus, advantageously, the movement of the belt module is performed only when it is safe to do so, when the hatch is closed. This increases safety for the operator.

The method may comprise: wherein controlling the hatch model to close the hatch comprises adjusting a timing of closing the hatch dependent on a current use of the belt module. Thus, advantageously, the movement of the belt module is performed only when it is safe to do so, when the hatch is closed. This feature further enhances safety of the port due to the interplay between the hatch module and the error recovery.

The containers may be picked by a robot picking device and not a human operator. If the containers are picked by a robot picking device and not a human operator, the controller may send a signal to the robot picking device to stop, and initialize first error type recovery even if the hatch is open. Thus advantageously, the silent error recovery may be more efficient while maintaining the safety of the operation.

If the type of error is a soft error, the method may comprise determining spontaneous movement status of the port.

The method may further comprise: controlling the belt module based on a position of one or more containers on the belt module. The controller may receive a signal from at least one sensor regarding the positions of one or more containers on the belt module. If the position of one or more containers on the belt module is not as expected, the controller may initialize the belt module based on the positions of one or more containers.

In general, a module may be allowed to move only once the port is allowed to perform spontaneous movements. The port may be allowed to perform spontaneous movements when it is safe to do so (e.g. the operator cannot reach parts and get injured). Advantageously, this increases safety of the operative. Spontaneous movement refers to a potential movement of the modules and/or other components of the port along a predetermined path. The potential movement path of the port modules is predetermined and known, allowing such movement to occur only when it is deemed safe (e.g., when no operator can come into contact with the moving parts.)

For instance, if the hatch is open, the silent error recovery of the module with the error will not be initiated until the operator finishes an operation and the hatch module is closed. This increases safety of the operator during the error management because the operator cannot reach the moving parts of the port.

Determining spontaneous movement status of the port may comprise determining, by the controller, an operational state of the hatch. If the hatch is in an open state, the controller may be configured to wait until the operator finishes an action and control the hatch to close the hatch after the operator finishes the action. The operator may press a button on a user interface positioned next to a port to send a signal to the controller that an action has been finished. Thus, advantageously, operator's safety is increased during error occurrence. In an instance that the hatch is in the closed state, the controller may execute the first error type recovery immediately.

Determining spontaneous movement status of the port may comprise determining, by the controller, operational states of the modules and/or other components of the port. Based on the determination, the controller may evaluate whether the port is in a safe state. The safe state may be defined as a state wherein safety risks to the operator are minimised (e.g. a closed hatch).

If the safe state cannot be achieved, the controller executes the hard error recovery.

The method may further comprise: in an instance that the type of error is a soft error, determining whether the module with the soft error is permitted to move based on the positions of other modules.

In other words, the controller is configured to determine whether movement of the module with the soft error is prevented by other modules. This determination may be based on at least one signal received from at least one sensor monitoring the other modules. A module may be allowed to move when the other modules do not prevent the movement because of their position or state. As a pre-requisite to initializing the silent error recovery, the controller may control other modules of the port to move the other modules and/or wait for other modules to complete their movement before initializing the module with the soft error. Advantageously, this increases safety of the operative.

If another module or a container prevents movement of the module with the soft error, the controller may control the obstructing module or container to move the obstructing module or container away to enable the movement of the module with the soft error.

If another module of the port or a container do not prevent movement of the module with the soft error, the controller may execute the silent error recovery of the module with the silent error.

Executing the silent error recovery may comprise initializing the module with the silent error. Executing the silent error recovery may comprise only initializing the module with the silent error. Executing the silent error recovery may comprise initializing only the module with the silent error, without initializing other modules of the port. Advantageously, the silent error recovery may be executed only on the module with the soft error and not the other modules of the port. This improves the efficiency of managing errors in the port.

The silent error recovery (i.e. the first error type recovery) may be different for each module of the port. In other words, the silent error recovery (i.e. the first error type recovery) may be based on a module of the port. The silent error recovery may be specific to a module of the port. The silent error recovery may be in relation to a single module of the port. The silent error recovery may be different for each soft error. Therefore, it will be appreciated that this disclosure is not limited to a specific silent error recovery.

For example, if the module with the silent error is the conveyor module, in some examples, the step of executing silent recovery may comprise moving the conveyor to its safe state.

The method may further comprise: determining a result of the first error type recovery.

Determining the result of the silent error recovery may comprise, receiving, by the controller, a second sensor reading/signal from the at least one sensor that reported the error (or the unusual signal). It will be appreciated that other techniques may be used to determine the result of the silent error recovery.

The method may further comprise: based on the determined result, continuing operation of the port or executing the hard error recovery. Thus, advantageously, damage to the port or harm no the operative is avoided if the error persist.

If the silent error recovery was successful, the controller may control the port to continue the operation of the port. If the silent recovery was unsuccessful, the controller may execute the hard error recovery. The silent error recovery is successful when the error is corrected.

The method may comprise: detecting an error. The method may comprise: detecting the error based on a signal received from at least one sensor. The method may comprise: monitoring the port, a module, or part of the module, by at least one sensor.

The at least one sensor may send sensor readings to the controller. The at least one sensor may send sensor readings to the controller continuously. The controller may be configured to receive sensor readings from at least one sensor. The controller may process the received sensor readings. The controller may be configured to detect an error based on the received signals from the at least one sensor. The controller may detect the error by comparing the expected (reference) signal to the actual (received) signal from the at least one sensor. The at least one sensor may be configured to detect an error.

The sensor may be a weight sensor, and/or an optical sensor, and/or a position sensor, and/or a motion sensor, and /or a proximity sensor, and/or an electromagnetic sensor, and/or a magnetic sensor; say. The at least one sensor may be any type of sensor configured to sense the state(s) of modules in the port. The at least one sensor may be any type of sensor configured to detect errors in modules of the port. The sensors may be placed in various positions in the port so that the sensors are able to monitor each port module. The sensors may be placed in various positions in the port so that the sensors are able to monitor each port module during operation of the port.

Described herein is a computer-readable storage medium comprising instructions which, when executed by one or more processors, cause the one or more processors to carry out the methods described herein.

Described herein is also a controller for controlling a port of an automated storage and retrieval system 1, the automated storage and retrieval system 1 comprising a two-dimensional rail system 108 comprising a first set of parallel rails 110 in a horizontal plane (PH) arranged to guide movement of container handling vehicles 201,301,401 in a first direction (X) across the top of a frame structure 100, and a second set of parallel rails 111 in the horizontal plane (PH) arranged perpendicular to the first set of parallel rails 110 to guide movement of the container handling vehicles 201,301,401 in a second direction (Y) which is perpendicular to the first direction (X), the controller being configured to carry out the methods described herein.

Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

The ports of the automated storage and retrieval system are configured for accessing containers that are stored within the storage area, or grid, of the automated storage and retrieval system. At the ports, operators are able to access the containers to retrieve and/or deposit items (also referred to as objects) into the containers.

During operation of a container retrieval process (and operation of the port), a container-handling robotic vehicles lowers its gripping device into the grid to engage a container stored therein. The container-handling robotic vehicle then lifts the container with its lifting device and carries the container as it traverses the grid. When the container-handling robotic vehicle arrives at the port, the container-handling robotic vehicle lowers the container into the port using its lifting device. The container-handling robotic vehicle then disengages the gripping device. A conveyer moves the container to an accessible point in the port at which an operator (such as a human, or robotic picking device) inserts or removes item(s) to/from the container. The container is then moved to a point in the port at which it is retrieved by a container-handling robotic vehicle (either the same or a different container-handling robotic vehicle). The container-handling robotic vehicle lowers its lifting device and engages the container with its gripping device. The container-handling robotic vehicle then lifts the container, and then traverses the grid whilst carrying the container to a storage location where the container is then lowered and disengaged.

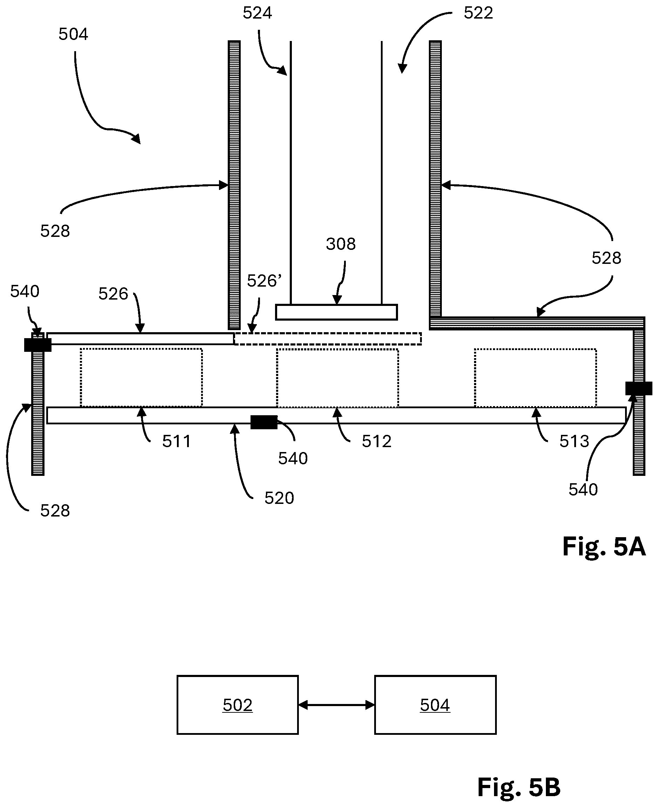

By way of example, implementations of the disclosure will now be described with reference to Figs. 5 to 8. Each possible combination of any features described below with any features described above also forms part of the disclosure.

Fig. 5A shows a conceptual cross-sectional diagram of a port 504.

The port 504 can be considered similar in purpose to the ports 130, 132 described with reference to Fig. 1.

The port 504 has three positions for containers: a first position 511, a second position 512, and a third position 513.

The first position 511, the second position 512 and the third position 513 are each dimensioned to accommodate a container.

The first position 511 is a position in which a container is accessible by an operator for the insertion and/or removal of item(s) into/from the container. In some cases, the container can be removed from the port 504 when the container is in the first position 511, and containers can be inserted into the port 504 in the first position 511. The containers have open tops through which the item(s) can be inserted to / removed from the containers.

The second position 512 is below a shaft 522 through which containers are delivered from a storage area 100 in the automated storage and retrieval system to the port 504, and delivered from the port 504 to the storage area 100. The containers are delivered between the port 504 and the storage area 100 by a container lift 524. The shaft 522 can be considered similar in purpose to the port columns 126, 128 described with reference to Fig. 1. The storage area 100 can be considered the grid or storage grid 100 as described with reference to Fig. 1.

The container lift 524 is integrated into a container-handling robotic vehicle 122 (not shown in Fig. 5A, but visible in Fig. 1) that traverses the grid 100, such as those described with reference to Fig. 3A-3C. The container lift 524 comprises the lifting device 304 and the gripping device 308 of the container-handling robotic vehicle 122.

The container-handling robotic vehicles 122 traverse the top of the grid 100. The port 504 is at a lower position (e.g., at the bottom of the grid as depicted in the example of Fig. 1). One end of the shaft 522 (i.e., the top end) is in the top of the grid 100 such that container-handling robotic vehicles 122 can traverse the top of the grid 100 to this top end of the shaft 522. The port 504 is located below the shaft 522 at the opposite end of the shaft 522 (i.e., the bottom end).

A container-handling robotic vehicle 122 retrieves a container from a storage location by lowering its gripping device 308 into an opening through the grid and engaging the container with the gripping device 308. The container-handling robotic vehicle 122 then traverses the grid 100 to the top end of the shaft 522. When at the top end of the shaft 522, the container-handling robotic vehicle 122 lowers the container down the shaft 522 to the port 504, where it is placed in the second position 512 and released from the gripping device 308.

When collecting a container from the port 504, the container-handling robotic vehicle 122 lowers the gripping device 308 into the shaft 522 to engage a container in the second position 512 at the port 504, and lifts the container from the second position 512 up to the container-handling robotic vehicle 122. The container-handling robotic vehicle 122 then traverses the grid while carrying the container.

When depositing a container at the port 504, the container-handling robotic vehicle 122 carries a container to the shaft 522, engaged with the gripping device 308. The container handling robotic vehicle 122 lowers the gripping device 308 (and container) into the shaft 522. When the container meets a conveyer 520 at the second position 512, the container-handling robotic vehicle 122 controls the gripping device 308 to disengage the container. The container is then deposited in the port 504. The container-handling robotic vehicle 122 can then retract, or lift, the gripping device 308 up the shaft 522.

In an alternative, the container lift 524 can be a fixed lift in/above the shaft 522, rather than integrated into a container-handling robotic vehicle 122.

The third position 513 is a position in which a container is temporarily stowed. This will be explained in more detail subsequently, with regard to the operation of the port 504.

The first position 511, the second position 512 and the third position 513 are arranged in a line. The second position 512 is between the first position 511 and the third position 513. The line extends inwardly to the three-dimensional grid structure, from the first position 511 to the third position 513. The first position 511 is outside the grid structure. The second position 512 is at the edge of the grid structure, below the shaft 522. The third position 513 displaced inward to the grid structure.

The conveyer 520 is configured to move containers between the first position 511, the second position 512 and the third position 513.

The conveyer 520 is a conveyer belt. The conveyer belt extends between first position 511 and the third position 513.

When a container enters the port 504, through the shaft 522, it is placed onto the conveyer 520. As the conveyer 520 moves, containers on the conveyer 520 move with it. When more than one container is on the conveyer 520, these containers move in unison.

The first position 511, second position 512, third position 513, and conveyer 520 can be within a port housing 528.

A hatch 526 covers the first position 511, for safety. The hatch 526 allows operator access into the port housing 528, and in particular access to the first position 511. The hatch 526 is configured as a panel that is over the first position 511 when in the closed state. The hatch 526 is configured to slide to the open state 526'. When the hatch 526 is in the open state 526', it is over the second position 512 in the port 504. The hatch 526 is configured to be in the closed state before a container arrives in the first position 511, and when containers are being moved into / out of the first position 511 by the conveyer 520. This inhibits a human operator from trapping fingers or limbs in the moving components. The hatch 526 is configured to switch from the closed state (as depicted in Fig. 5A) to the open state (as indicated by the dashed line box 526' in Fig. 5A) when a container has arrived in the first position 511, so that an operator can insert/remove item(s) to/from the container.

In some examples, the hatch 526 automatically opens and closes. The hatch is controlled by the controller. In other examples, the hatch 526 is manually opened and closed, by an operator. The hatch 526 can be automatically locked and released, to prevent an operator from opening the hatch 526 at the wrong time. In some examples, the hatch 526 needs to be in a closed position for a container to be moved to/from the first position 511 by the conveyer 520, and movement of the conveyer 520 is inhibited when the hatch 526 is open.

The port 504 comprises three sensors 540. The sensors 540 are placed at various positions throughout the port 504 so that the sensors can monitor modules of the port 504 and the containers. The sensors are configured to monitor modules of the port 504 and the containers. The sensors are configured to send signals to a controller.

Fig. 5B shows a block diagram of a system comprising the interaction between the port 504 and a controller 502 of the port 504.

The controller 502 controls the operation of the port 504.

The controller 502 controls the movement of the conveyer 520. The controller 502 can control the hatch 526. The controller 502 controls the initiation of containers being lowered into the port / raised from the port 504 by the container lift 524. The controller controls the modules/parts (e.g. the conveyor 520) of the port 504.

That is, the controller 502 is a processing unit or computer (or sub-component thereof) that executes software to control the hardware elements of the port 504.

The control system communicates with the hardware elements at the port 504 through wired and/or wireless connections and interfaces.

In an example, the controller 502 is the main control system of the automated storage and retrieval system (e.g., the processing system 400 described with reference to Fig. 4), or a module or software module of such a main controller. Alternatively, the controller 502 is a separate control system that controls the port 504. The controller 502 communicates / interfaces with the main control system. The main control system controls the container-handling robotic vehicles 122, or a separate robotic vehicle controller that is a component of / interfacing with the main control system controls the container-handling robotic vehicles 122. Through being either a component of the main control system, or through interfacing with the main control system, the controller 502 can therefore initiate the lowering/raising of the container lift 524 through the shaft 522 to deposit and collect containers by sending a control signal directly to the container-handling robotic vehicle 122 or container lift 524, or indirectly to the container-handling robotic vehicle 122 or container lift 524 via other control systems in communication with the controller 502.

The controller 502 is in communication with the at least one sensor 540 of the port 504. The controller 502 is in communication with other sensors of the system 100. The controller is configured to receive signal from the at least one sensor 540. The signal comprises sensor readings.

Undesirably, the port may deviate from expected or desirable operation, giving rise to error(s) associated with the port 504. For instance, an error may occur/be generated when a container cannot be engaged by a container lifting device (also referred to a container lift) at the port. An error may also occur if a sensor cannot determine precise position of a container on the conveyor belt 520.

Fig. 6 shows a flowchart depicting a method for managing errors that are generated at a port of an automated storage and retrieval system, the port comprising a plurality of modules. The controller is configured to perform the steps of this method.

The method comprises S105: detecting an error in a module of the plurality of modules.

The fault/error at the port is detected based on a signal received from at least one sensor. The at least one sensor monitors the port and transmits sensor readings to the controller. The controller is configured to receive sensor readings from at least one sensor.

The method comprises S110: determining a type of an error related to the module of the plurality of modules.

The error is occurring during an operation of the port.

The type of the error is a soft error (i.e. first error type) or a hard error (i.e. second error type).

Error recovery is based on a type error and a module affected by the error. For example, in a belt module, a soft error is corrected by initializing the belt module. For example, in a hatch module, a soft error is corrected by initializing the hatch module. Only initializing the affected module is a first error type recovery. It will be appreciated that initialization of the belt module involves steps executed by the controller that differ from those involved in initialization of the hatch module.

In some examples, the method comprises determining a type of an error related to a module of the plurality of modules, the error occurring during an operation of the port; when it is determined that the type of the error is a first error type, executing a first error type recovery for which the operation of the port continues.

If more than one error is detected, irrespective of the type of error, the controller executes the hard error recovery.

If more than one error is detected, and one error is a soft error and the other error is a hard error, the controller is configured to prioritize the hard error and execute the hard error recovery.

If a soft error is detected during initialization, the controller is configured to execute hard error recovery. Soft errors are not allowed during initializing stage of the port.

In some examples, determining the type of the error comprises determining the type of error based on error data. The error data comprises historical error data.

A learning model is implemented to collect data of the port operations. The learning model is configured to determine the incidence and impact of the previously detected errors. The learning model is configured to analyze features such as error type and/or frequency and/or duration and/or affected modules and/or affected components, and/or recovery results and/or corresponding recovery techniques. The learning model is trained to classify errors as either first error type (soft errors) or second error type (hard errors).

Determining the type of the error comprising using the learning model; wherein the learning model is trained on the error data; and/or wherein the error data is human-labelled, and/or human inputted data. In this human-labelled data set, a person (e.g. the administrator of the storage and retrieval system) labels which errors are soft errors and which errors are hard errors.

The error data comprises information about errors and their corresponding, recovery techniques for correcting the errors. The learning model is configured to assign corresponding recovery techniques to specific errors.

Alternatively, the controller is configured to determine the type of the error based on error data, wherein the error data is provided by a human.

The method comprises S115: when it is determined that the type of the error is a second error type, executing a second error type recovery. The operation of the port is interrupted during the second error type recovery. In some examples, the second error type recovery comprises initializing all modules of the port.

The method comprises S120: when the type of error is a first error type, determining spontaneous movement status of the port.

In some examples, determining spontaneous movement status of the port comprises determining, an operational state of the hatch. If the hatch is in an open operational state, the controller is configured to wait until the operator finishes an action and control the hatch to close the hatch after the operator finishes the action. The operator interacts with a user interface positioned outside of the port, in the vicinity of the port to transmit a signal to the controller, wherein the signal notifies the controller about the end of action performed by the operator.

In some examples, determining spontaneous movement status of the port comprises determining, by the controller, operational states of the modules and/or parts of the port. Based on the determination, the controller evaluates whether the port is in a safe state.

If the safe state cannot be achieved, the controller executes the hard error recovery.

The method comprises S125: when the type of error is a first error type, determining whether the module is permitted to move based on the positions of other modules.

In some examples, when the type of error is a first error type, controlling a movement of the module based on a position of one or more of the other modules of the plurality of modules.

Positions of the other modules are based on at least one signal received from at least one sensor monitoring the other modules. Accordingly, the controller is configured to receive a signal from at least one sensor regarding positions of other modules in the port. To initiate the silent error recovery, the controller is configured to control other modules of the port to move the other modules and/or wait for other modules to complete their movement before executing silent error recovery of the module.

If another module of the port prevents movement of the module with the soft error, the controller is configured to control the obstructing module to move the obstructing module away to permit the movement of the module with the soft error.

In an instance that the module with the soft error is permitted to move based on the positions of other modules, the controller is configured to execute the silent error recovery of module with the silent error.

The method further comprises S130: when the type of the error is the first error type, and based on the determinations, executing the first error type recovery of the module. The operation of the port continues during the first error type recovery.

The method may comprises S135: determining a result of the first error type recovery.

The method further comprises S140: based on the determined result, continuing operation of the port or executing the hard error recovery.

Determining the result of the silent error recovery comprises, receiving, by the controller, a second sensor reading/signal from the at least one sensor that reported the signal with the error.

The result is successful, when the error is corrected; or the result is unsuccessful when the error is not corrected.

When the silent recovery is successful, the controller is configured to control the port to continue the operation of the port. When the silent recovery is unsuccessful, the controller is configured to execute the hard error recovery.

Fig. 7 shows a flowchart depicting a method for managing errors at a conveyor module of a port of an automated storage and retrieval system. The port configured for accessing containers in the automated storage and retrieval system. The port comprises a hatch. The conveyor module comprises a conveyor belt. The controller is configured to carry out the steps of this method.

The method comprises S200: detecting an error in a conveyor module.

The error is detected based on a signal received from at least one sensor.

The method comprises S205: determining a type of the error.

The type of the error is a soft error or a hard error.

When more than one error is detected, irrespective of the type of error, the controller executes the hard error recovery.

When more than one error is detected, and one error is a soft error and the other error is a hard error, the controller is configured to prioritize the hard error and execute the hard error recovery.

When a soft error is detected during initialization, the controller is configured to execute hard error recovery. Soft errors are not allowed during initializing stage of the port.

In one example, the controller is configured to determine the type of the error based on error data. The learning model is trained on the error data. In some examples, the error data is provided by a human to the controller.

The method comprises S210: when the type of the error is a second error type, executing a second error type recovery.

The method comprises S215: when the type of the error is a first error type, determining spontaneous movement status of the port.

Determining spontaneous movement status of the port comprises determining, an operational state of the hatch. If the hatch is in an open operational state, the controller is configured to wait until the operator finishes an action and control the hatch to close the hatch after the operator finishes the action. The operator interacts with a user interface positioned outside of the port, in the vicinity of the port to transmit a signal to the controller, wherein the signal notifies the controller about the end of action performed by the operator.

The method comprises S220: when the type of error is a first error type, determining whether the conveyor module is permitted to move.

The movement of the conveyor module is usually not prevented by other modules in the port as long as the hatch is closed. But, the movement of the conveyor module may be obstructed, for instance, due to a severe structural damage to the port housing.

The movement of the conveyor module may be obstructed by incorrect positioning of the containers on the conveyor belt. The method comprises controlling the belt module based on a position of one or more containers on the belt module.

The method comprises controlling the conveyor module based on a position of one or more container on the belt module to bring the conveyor module to a safe state. In some examples, the controller incrementally moves the conveyor module to a safe state.

The method comprises S225: when the type of the error is the first error type, and based on the determinations, executing the first error type recovery of the conveyor module.

The silent error recovery for the conveyor module comprises only initializing the conveyor module. The other modules of the port are not initialized.

The method comprises S230: determining a result of the first error type recovery. The method comprises S235: based on the determined result, continuing operation of the port or executing the second error type recovery.

When the silent recovery is successful, the controller is configured to control the port to continue the operation of the port. When the silent recovery is unsuccessful, the controller is configured to execute the hard error recovery. The successful silent recovery is when the error is corrected/cleared by the silent error recovery. The successful silent recovery is when the error is corrected by the silent recovery method and the conveyor module is operational.

Fig. 8 shows another method for managing errors at a port of an automated storage and retrieval system, the port comprising a plurality of modules. The method is performed by the controller.

The method comprises S305: determining a type of an error related to a module of the plurality of modules, the error occurring during an operation of the port.

The method comprises S310: when it is determined that the type of the error is a first error type, executing a first error type recovery for which the operation of the port continues.

The method comprises S315: when it is determined that the type of the error is a second error type, executing a second error type recovery during which the operation of the port is interrupted.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Aspects of the present disclosure are set out below . Each item below corresponds to an aspect of the disclosure, and each possible combination of any of the items corresponds to an aspect of the disclosure. When items are combined, two or more instances of an element with the same name are to be understood as referring to the same element, even if the element is introduced by the word "a" more than once. Each possible combination of any features from the items below with any features described above also forms part of the disclosure.

A method for managing errors at a port of an automated storage and retrieval system, ASRS, the method comprising: determining a type of an error when it is determined that the type of the error is a first error type, executing a first error type recovery.

A method for managing errors at a port of an automated storage and retrieval system, ASRS, the method comprising: determining a type of an error when it is determined that the type of the error is a first error type, executing a first error type recovery; wherein the port comprises a hatch.

A method for managing errors at a port of an automated storage and retrieval system, ASRS, the port comprising a plurality of modules, the method comprising: determining a type of an error related to a module of the plurality of modules, the error occurring during an operation of the port; when it is determined that the type of the error is a first error type, executing a first error type recovery for which the operation of the port continues; wherein the first error type recovery is specific to the module.

A method for managing errors at a port of an automated storage and retrieval system, ASRS, the port comprising a plurality of modules, the method comprising: determining a type of an error related to a module of the plurality of modules, the error occurring during an operation of the port; when it is determined that the type of the error is a first error type, executing a first error type recovery for which the operation of the port continues.

A computer program comprising instructions which, when the program is executed by a controller, cause the controller to carry out the methods described herein.

A port configured to be controlled by the controller described herein.

A storage and retrieval system comprising the controller described herein.

A system comprising the port and the controller described herein.

## Claims

1. A method for managing errors at a port of an automated storage and retrieval system, ASRS, the port comprising a plurality of modules, the method comprising:
determining a type of an error related to a module of the plurality of modules, the error occurring during an operation of the port;
when it is determined that the type of the error is a first error type, executing a first error type recovery for which the operation of the port continues.

2. The method of claim 1,
when it is determined that the type of the error is a second error type, executing a second error type recovery during which the operation of the port is interrupted.

3. The method of claim 2, wherein the error is a first error type, further comprising:
determining a type of a second error related to the module of the plurality of modules, the second error occurring during the operation of the port, in a period overlapping when the first error occurs; and in response:
executing the second error type recovery.

4. The method of any one of the preceding claims,
wherein the first error type recovery comprises clearing the error with the operation being continuous between when the error occurs and clearing of the error;
wherein the second error type recovery comprises interruption of the operation after the error occurs.

5. The method of any one of the preceding claims, in which the first error type comprises a soft error, the second error type comprises a hard error.

6. The method of any one of the preceding claims, further comprising
determining if the first error type occurs during an initialization of the port, and if so,
executing the second error type recovery.

7. The method of any one of the preceding claims, further comprising:
when it is determined that the error is the first error type,
controlling a movement of the module based on a position of one or more of the other modules of the plurality of modules.

8. The method of any one of the preceding claims,
wherein determining the type of the error comprises determining the type of error based on error data;
wherein the error data comprises historical error data.

9. The method of claim 8, further comprising
determining the type of the error comprising using learning model;
wherein the learning model is trained on the error data; and/or
wherein the error data is human-labelled, and/or human inputted data.

10. The method of any one of the preceding claims,
wherein the module is a belt module; the method comprising
determining a movement status of the port comprises:
determining a hatch state of the hatch module;
and when it is determined the hatch state comprises a hatch of the hatch model is open,
controlling the hatch module to close the hatch depending on the movement status of the port.

11. The method of claim 11, wherein controlling the hatch model to close the hatch comprises adjusting a timing of closing the hatch dependent on a current use of the belt module.

12. The method of any one of the claims 10 to 11, further comprising
controlling the belt module based on a position of one or more containers on the belt module.

13. The method of any one of the preceding claims,
wherein the plurality of modules comprises at least one of:
a conveyor module, a hatch module, and a gripping module.

14. A controller for controlling a port of an automated storage and retrieval system (1), the automated storage and retrieval system (1) comprising a two-dimensional rail system (108) comprising a first set of parallel rails (110) in a horizontal plane (PH) arranged to guide movement of container handling vehicles (201,301,401) in a first direction (X) across the top of a frame structure (100), and a second set of parallel rails (111) in the horizontal plane (PH) arranged perpendicular to the first set of parallel rails (110) to guide movement of the container handling vehicles (201,301,401) in a second direction (Y) which is perpendicular to the first direction (X), the controller being configured to carry out the method of any one of claims 1 to 13.

15. A computer-readable storage medium comprising instructions which, when executed by one or more processors, cause the one or more processors to carry out the method of any one of claims 1 to 13.
